Europäisches Patentamt

European Patent Office

Office européen des brevets

(19)

(11) **EP 0 658 755 B1**

(12) **EUROPÄISCHE PATENTSCHRIFT**

(45) Veröffentlichungstag und Bekanntmachung des Hinweises auf die Patenterteilung:
**20.01.1999  Patentblatt 1999/03**

(51) Int Cl.6: **G01L 21/12**, G01L 21/34

(21) Anmeldenummer: **94118628.0**

(22) Anmeldetag: **26.11.1994**

(54) **Verfahren zum Auswerten der Ausgangssignale zweier Drucksensoren, Druckmessanordnung mit zwei Druckmesssensoren und Druckmesskopf**

Procedure for evaluating the output signals of two pressure sensors, corresponding device with two sensors and pressure sensor head

Procédé pour évaluer les signaux de sortie de deux capteurs de pression, dispositif avec deux capteurs et tête de mesure de pression

(84) Benannte Vertragsstaaten:
**DE FR GB IT NL**

(30) Priorität: **15.12.1993  CH 3757/93**

(43) Veröffentlichungstag der Anmeldung:
**21.06.1995  Patentblatt 1995/25**

(73) Patentinhaber: **BALZERS AKTIENGESELLSCHAFT**
**9496 Balzers (LI)**

(72) Erfinder:
• **Stocker, Rudolf**
**CH-9478 Azmoos (CH)**
• **Stoeckli, Armin Leo**
**CH-7320 Sargans (CH)**
• **Boesch, Martin**
**CH-9478 Azmoos (CH)**

(74) Vertreter: **Troesch Scheidegger Werner AG**
**Patentanwälte,**
**Siewerdtstrasse 95,**
**Postfach**
**8050 Zürich (CH)**

(56) Entgegenhaltungen:
**EP-A- 0 233 784       EP-A- 0 347 144**
**EP-A- 0 379 841**

**Beschreibung**

Die vorliegende Erfindung betrifft ein Verfahren zum Auswerten der Ausgangssignale zweier Drucksensoren nach dem Oberbegriff von Anspruch 1 sowie eine Druckmessanordnung nach dem Oberbegriff von Anspruch 6 und einen Druckmesskopf nach dem Oberbegriff von Anspruch 14.

Es sind diverse Messprinzipien zur Messung von Drücken im Bereiche von 1bar absolut bis in den Ultrahoch-Vakuumbereich hinein bekannt. Jedes heute bekannte Vakuunmessprinzip ist aber mit Nachteilen behaftet, wovon die wesentlichsten sind:

- beschränkter Messbereich,

- Gasartabhängigkeit,

- Anfälligkeit auf Störeinflüsse, wie Temperatur, Verschmutzung und Alterung,

- Kostenfaktor.

Ein Ansatz zur Lösung dieser Probleme, insbesondere auch bezüglich des beschränkten Messbereiches, ist die Verwendung und Kombination mehrerer Drucksensoren mit unterschiedlichen Messprinzipien, welche mit demselben Druckmedium beaufschlagt werden. Hierzu sind folgende Lösungen bekannt:

1. Die Messsignale von mindestens zwei getrennt aufgebauten Sensoren, welche nach unterschiedlichen Messprinzipien arbeiten, werden am gleichen Auswertegerät verarbeitet. Mit dem Signal des einen Sensors, d.h. bei Erreichen eines Grenzdruckwertes des diesem Sensor zugeordneten Druckbereiches, wird der zweite Sensor aufgeschaltet. Es wird, abhängig vom Druckbereich, das Signal des einen oder des anderen Sensors am auswertenden Messgerät zur Anzeige gebracht. Als Beispiele für diese Technik können genannt werden die Pirani-Sensor/Kaltkathoden- bzw. Heisskathoden-Ionisationssensor-Kombination der Balzers-Geräte PKG 100, TPG 300, IMG 300 sowie beispielsweise der Geräte COMBIVAC, COMBITRON der Firma Leybold.

Ein Vorteil dieses Vorgehens ist der grosse Messbereich, nachteilig sind aber die hohen Kosten, insbesondere begründet durch das Vorsehen von zwei separaten Sensoranordnungen und deren Montagevorkehrungen, wie z. B. von zwei Anschlussflanschen, sowie, weiter, das über den Druckbereich weder stetige noch eindeutige Ausgangssignal, bedingt durch das Umschalten vom einen Sensor auf den anderen. Da die Gasartabhängigkeit und andere Störeinflüsse bei den eingesetzten verschiedenen Messprinzipien sehr unterschiedlich sein können, können die Umschaltsprünge sehr gross sein. Zum Beispiel ist eine stabile Druckregelung in diesem Umschaltbereich nicht möglich.

2. Zur Verringerung der Kosten und des Platzbedarfes ist es auch bekannt geworden, verschiedene Messsensoren, welche nach unterschiedlichen Messprinzipien arbeiten, auf einen Flansch zu vereinen. Weiterhin geschieht aber die Auswertung der Sensorsignale wie unter 1. erwähnt. Hierzu kann auf die Kombination eines piezoresistiven Membransensors mit einem Pirani-Sensor auf einem Flansch, beispielsweise beim Gerät VSKP45M der Firma Thyracont Electronic GmbH, Passau, hingewiesen werden. Bekannt ist ebenfalls die Kombination von Heisskathoden-Ionisationsmanometer und Pirani-Sensor auf einem Flansch, wozu auf C. Edelmann et al., Feingerätetechnik 24, S. 408-411 (1975), sowie auf die EP-A-0 233 784 und die US-A-4 755 669 verwiesen sei, wie auch auf die Messröhre AIG17P der Firma AML.

Unter diesem Aspekt ist weiter auch die Kombination von Gasreibungs-Manometer und Heisskathoden-Ionisationsmanometer auf einem Flansch bekannt, wozu auf die US-A-4 747 311 verwiesen sei. Wie bereits erwähnt, werden in all diesen Fällen die Sensorsignale bei Erreichen der Bereichsgrenzen umgeschaltet, und ihre Ausgangssignale werden ausschliesslich alternativ zur Anzeige gebracht. Immerhin werden gegenüber dem Vorgehen nach 1. Kosteneinsparungen erreicht.

3. Es ist weiter eine Kombination von Gasreibungs-Manometer und Pirani-Sensor auf einem Flansch bekannt, wobei die zwei Sensorausgangssignale so verarbeitet werden, dass ein über einen erweiterten Druckbereich stetiges Ausgangssignal ohne Umschaltsprünge entsteht. Hierzu sei auf die EP-A-0 347 144 verwiesen.

4. Es ist weiter bekannt eine Kombination von Gasreibungs-Manometer und Pirani-Sensor auf einem Flansch und die Kombination der zwei Sensorsignale so, dass ein von der Gasart praktisch unabhängiges Ausgangssignal entsteht, wozu auf die EP-A-0 379 841 (US-A-4 995 264) verwiesen sei.

5. Im weiteren ist auch die Kombination der Signale eines Membrandrucksensors und eines Wärmeleitungssensors entsprechend einem Pirani-Senspr bekannt, um damit über einen grossen Bereich empfindliche Höhenmesser zu entwickeln, wozu auf das US-A-3 064 478 verwiesen sei.

Die vorliegende Erfindung geht aus von der obgenannten, aus der EP-A-0 347 144 bekannten Technik. Gemäss dieser Schrift wird ein Quarzoszillator dem Vakuum ausgesetzt und, ähnlich einem Pirani-Sensor, die Wärmeleitung von einer Heizwendel in die Umgebung durch die Erwärmungsauswirkung auf den Quarzoszillator erfasst. Dabei wird der Heizstrom der Wendel so geregelt, dass bei variierendem Druck die Resonanzfrequenz des Quarzoszillators konstant bleibt. Als das eine Sensorausgangssignal wird die der Heizwendel als Regelungsstellglied zugeführte elektrische Heizenergie gemessen. Als zweites Sensorausgangssignal wird die Resonanzspannung des Quarzoszillators gemessen. Aus der Erkenntnis, dass die Druckabhängigkeit der für konstante Resonanzfrequenz der Heizwendel zuzuführenden Leistung in einem unteren Druckbereich abnimmt, um einem konstanten, minimalen Wert zuzustreben, und sich die Resonanzspannung erst in einem oberen Druckbereich abnehmend ändert, wird durch Summation der beiden als Sensorausgangssignale zu betrachtenden Grössen, nämlich Heizenergie und Resonanzspannung, eine Druckdiskriminator-Kennlinie erreicht, welche über sieben Druckdekaden eine Druckdiskrimination erlaubt.

Wiewohl mit der in der EP-A-0 347 144 erläuterten Technik ein grosser Druckbereich gemessen werden kann, ist die vorgeschlagene Signalüberlagerungstechnik sehr spezifisch auf dem thermischen Resonanzverhalten eines Quarzoszillators begründet.

Die vorliegende Erfindung setzt sich zur Aufgabe, ein Verfahren eingangs genannter Art zu schaffen, bei welchem, je nach messtechnisch zu überstreichendem Druckbereich, bekannte Druckmesssensoren mit ihren spezifischen Messbereichen kombiniert werden können, ohne dass am Bereichsübergang, d.h. im Zwischenbereich, Messsignalsprünge oder Hystereseeffekte entstehen. Damit soll ermöglicht werden, je nach Einsatzzweck, die geeigneten Sensorkombinationen zu wählen, wodurch insbesondere auch ermöglicht wird, den messtechnisch eineindeutig erfassten Druckbereich durch gezielte Sensorwahl ganz wesentlich über den aus der EP-A-0 347 144 bekannten zu erhöhen und insbesondere auch den eineindeutigen Messbereich gegenüber dem des Einzelsensors massiv zu vergrössern.

Diese Aufgabe wird bei Vorgehen nach dem kennzeichnenden Teil von Anspruch 1 gelöst.

Eine insbesondere bevorzugte Sensorkombination ist diejenige eines Pirani-Sensors und eines Kaltkathoden-Ionisationssensors. Abgesehen von der hier vorerst diskutierten Uebergangssteuerung von einem Sensor auf den anderen, weist die bevorzugte erwähnte Kombination gegenüber dem Einsatz von Pirani-Sensoren mit Heisskathoden-Ionisationssensoren den wesentlichen Vorteil auf, dass der Kaltkathoden-Ionisationssensor eine sehr viel geringere Wärmeentwicklung aufweist als ein Heisskathoden-Ionisationssensor. Thermische Störungen vom einen Sensor auf den anderen und Störungen durch Abgasen sind damit stark reduziert. Damit lässt sich baulich die Kombination eines Pirani-Sensors und eines Kaltkathoden-Ionisationssensors wesentlich dichter gestalten als die bauliche Vereinigung eines Pirani-Sensors und eines Heisskathoden-Ionisationssensors.

Betrachtet man weiter den relevanten Messbereich eines Pirani-Sensors von unter $10^{-3}$mbar bis über 100mbar sowie den relevanten Messbereich eines Kaltkathoden-Ionisationssensors, wie beispielsweise aus Max Wutz, Theorie und Praxis der Vakuumtechnik, Friedr. Vieweg & Sohn, Braunschweig/Wiesbaden, bekannt, welcher von mindestens $10^{-8}$mbar bis $10^{-2}$mbar verläuft, so ist ersichtlich, dass durch diese erfindungsgemässe Kombinationsselektion ein Druckbereich überstrichen werden kann, der wesentlich höher ist als sieben Dekaden, der neun und mehr Druckdekaden durchläuft, d.h. beispielsweise von $10^{-8}$mbar bis über 100mbar. Dank der vorgeschlagenen, gewichteten Kombination der Sensorausgangssignale wird im ganzen Druckbereich eineindeutig gemessen.

Bei dieser bevorzugten Sensorkombination wird nun weiter, nach dem Wortlaut von Anspruch 2, vorgeschlagen, die nach Anspruch 1 vorzusehende Gewichtungsfunktion durch das Ausgangssignal des Pirani-Sensors zu steuern, welch letzterer über den gesamten Druckbereich, und insbesondere auch im Zwischendruckbereich oberhalb $10^{-4}$mbar bis $10^{-2}$mbar, noch relevant misst, oder aber bei einer bevorzugten und optimierteren Variante die erwähnte Gewichtungsfunktion durch eine Kombination des Pirani-Ausgangssignals und eines vom gewichteten kombinierten Ausgangssignal rückgeführten Signals zu realisieren.

Bei einer Ausführungsvariante nach dem Wortlaut von Anspruch 3 wird, der ersten unter Anspruch 2 erwähnten Alternative folgend, die Realisation der gewichteten Signalüberlagerung insbesondere durch Analogschaltungstechnik an Bipolartransistoren einfach möglich.

Grundsätzlich kann die gewichtete Signalüberlagerung, wie erwähnt, durch Analogtechnik oder, wie noch zu erläutern sein wird, durch Pulsbreitenmodulation oder gegebenenfalls auch durch rechnerische Verarbeitung digitalisierter Sensorausgangssignale erfolgen, gemäss Wortlaut von Anspruch 4.

Die multiplikative Gewichtung entsprechend der zweiten, in Anspruch 1 spezifizierten Variante, welche auch bei der erfindungsgemäss bevorzugten Sensorkombination Pirani-Sensor/Kaltkathoden-Ionisationssensor eingesetzt wird, wird bevorzugterweise nach dem Wortlaut von Anspruch 5 vorgenommen. Hierbei wird die Gewichtungsfunktion, wie bereits erwähnt, in optimaler Art durch die Kombination des Pirani-Ausgangssignals und eines rückgeführten Signals gesteuert, welch letzterwähntes Signal vom gewichtet kombinierten Ausgangssignal abgeleitet ist.

Ein erfindungsgemässer Druckmessensor zeichnet sich zur Lösung der obgenannten Aufgabe nach dem kennzeichnenden Teil von Anspruch 6 aus, bevorzugte Ausführungsvarianten nach den Ansprüchen 7 bis 13.

Ein erfindungsgemässer Druckmesskopf nach dem Wortlaut von Anspruch 14 ist aufgebaut mit einer Druckmessanordnung nach einem der Ansprüche 6 bis 13 und weist, nach dem Wortlaut von Anspruch 15, die oben erwähnte bevorzugte Kombination eines Pirani-Sensors und eines Kaltkathoden-Ionisationssensors auf, welche, zusammen mit einer Messschaltung hierfür, baulich am Kopf vereint sind.

Die Erfindung wird anschliessend beispielsweise anhand von Figuren erläutert.

Es zeigen:

Fig. 1   in Form eines Funktionsblock/Signaldiagrammes eine erfindungsgemässe Druckmessanordnung, nach erfindungsgemässen Verfahren arbeitend;

Fig. 2   eine spezifische Ausführungsvariante des Vorgehens nach Fig. 1, bevorzugt für Sensoren, deren Ausgangscharakteristika im Zwischenbereich additiv unterschiedlich sind (unterschiedlicher Offset);

Fig. 3   eine weitere spezifische Ausführungsvariante des Vorgehens nach Fig. 1, bevorzugt für Sensoren, deren Ausgangscharakteristika im Zwischenbereich multiplikativ unterschiedlich sind (unterschiedliche Empfindlichkeit);

Fig. 4   eine weitere bevorzugte Ausführungsvariante des Vorgehens nach Fig. 3;

Fig. 5   eine schaltungstechnische Realisationsform einer Gewichtungs- und Auswertungseinheit, insbesondere für die Ausgangssignale von Pirani-Sensor und Kaltkathoden-Ionisationssensor;

Fig. 6   eine weitere Ausführungsvariante zur Realisation der erfindungsgemäss eingesetzten Gewichtungsfunktion durch Pulsbreiten-Modulationstechnik;

Fig. 7   eine heute bevorzugte Realisationsform einer erfindungsgemässen Druckmessanordnung, arbeitend nach dem erfindungsgemässen Verfahren, bei welchem die Gewichtungsfunktion sowohl durch das Ausgangssignal eines Pirani-Sensors wie auch durch Rückführung des gewichtet kombinierten Messausgangssignals gesteuert ist;

Fig. 8   die mit einer Anordnung nach Fig. 7 erzielte Messcharakteristik, die in einem wesentlich über den Messbereich eines Einzelsensors hinausgehenden Bereich ein eineindeutiges Messsignal liefert;

Fig. 9   eine Schnittdarstellung durch einen erfindungsgemässen Kombinationsmesskopf in vereinfachter Darstellung.

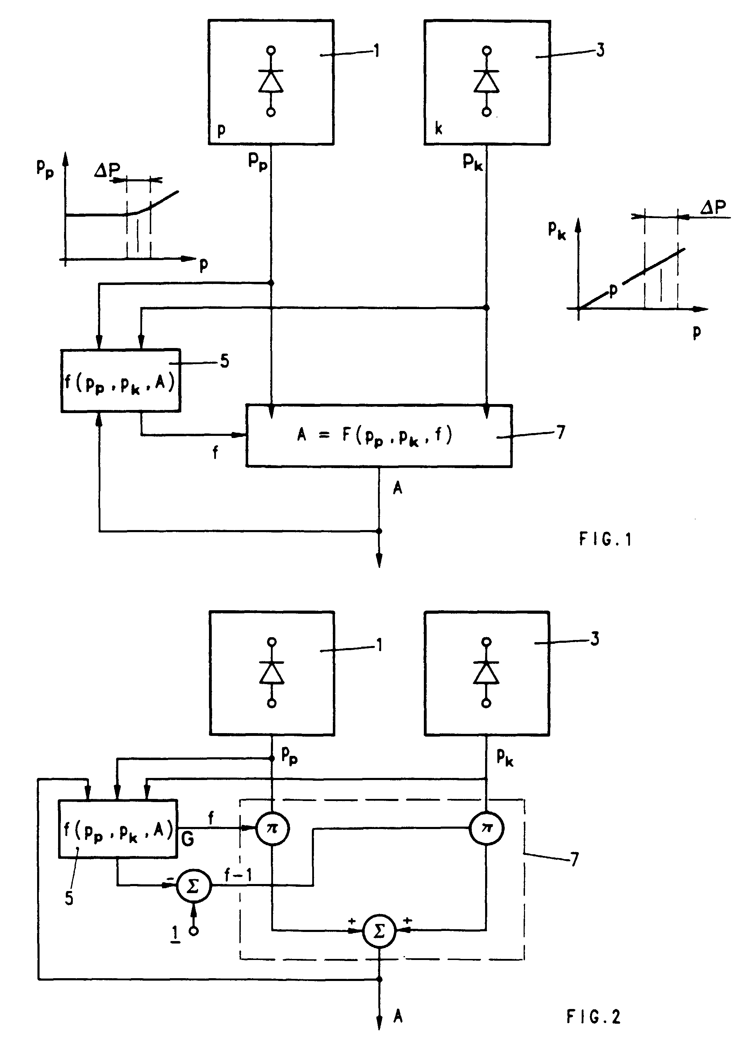

Anhand von Fig. 1 sei vorerst das Grundprinzip der Signalverarbeitungstechnik gemäss vorliegender Erfindung erläutert.

Es sind zwei Sensoren 1 und 3 des Typus "p" und "k" gegeben. Die Sensoren 1 und 3 geben in Funktion derselben physikalisch zu erfassenden Grösse p Ausgangssignale $p_p$ und $p_k$ ab. Dabei geben Sensor 1 z.B. in einem oberen Wertebereich der physikalischen Grösse p ein repräsentatives Messsignal ab, Sensor 3 im unteren Wertebereich der physikalischen Grösse p.

Die Ausgangssignale der Sensoren 1 und 3 werden einerseits einer Gewichtungsfunktionseinheit 5 zugeführt, anderseits einer Messwert-Bestimmungseinheit 7, welch letztere ein Ausgangssignal A als ein für die physikalische Grosse p repräsentatives Signal abgibt. Es wird ein Zwischenbereich ΔP festgelegt, innerhalb dem der Uebergang von Sensor 1 auf Sensor 2 bezüglich repräsentativer Messung erfolgt.

Im allgemeinsten Fall ist der Gewichtungsfunktionseinheit 5 auch das Ausgangssignal A der Messwert-Bestimmungseinheit 7 zugeführt, und es wird an ihr, in Funktion der Sensorausgangssignale sowie des Ausgangssignals der Messwert-Bestimmungseinheit, die Gewichtungsfunktion f gebildet. An der Messwert-Bestimmungseinheit 7 wird das Ausgangssignal A als Funktion der Sensorausgangssignale sowie der Gewichtungsfunktion f gebildet.

Es sei nun im weiteren die Art der Gewichtung betrachtet.

Bei additiver Kombination der Sensorausgangssignale wird das Ausgangssignal A gemäss Fig. 2 der Messwert-Bestimmungseinheit 7 nach

$$A = fp_p + (1-f)p_k \tag{1}$$

gebildet ("arithmetische Gewichtung"). Darin ist f die Gewichtungsfunktion und läuft im Zwischenbereich ΔP zwischen den Werten 0 und 1, beispielsweise so, dass, gemäss (1) und Fig. 1, am linken Rand von ΔP die Gewichtungsfunktion den Wert 0 annimmt, am rechten den Wert 1.

Die zweite Art der Signalkombination ist die multiplikative Art ("geometrische Gewichtung"). Darnach wird das Ausgangssignal A nach

$$A = p_p^{\,f} {}_*p_k^{\,(1-f)} \tag{2}$$

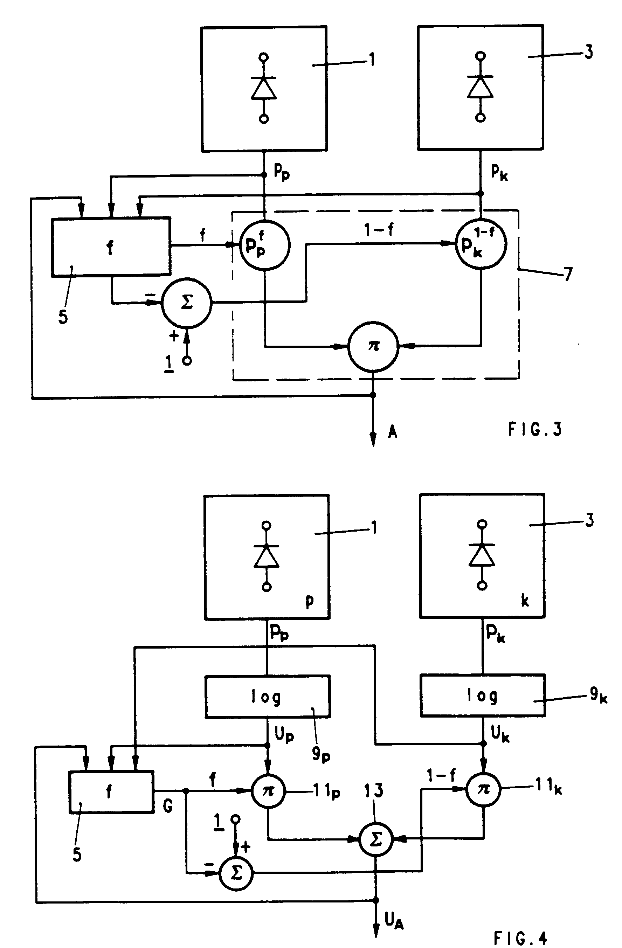

gebildet, entsprechend Fig. 3.

Wie bereits in Fig. 2, ist auch hier gestrichelt die Messwert-Bestimmungseinheit 7 eingetragen.

Welche Art der erwähnten zwei grundsätzlichen Gewichtungsmethoden besser ist, hängt von den Fehlereinflüssen ab, welche beim Uebergang vom Messen der physikalischen Grösse p mit einem Sensor zu deren Messung mit dem zweiten zu berücksichtigen ist.

Wie bereits eingangs erwähnt wurde, wurde das gemäss vorliegender Erfindung primär zu lösende Problem insbesondere aufgrund der Aufgabe, eine Druckmessung über viele Dekaden eineindeutig vornehmen zu können, angegangen. Es soll eine eineindeutige Druckmessung über einen so grossen Bereich vorgenommen werden können, dass sie nicht mit einem Einzelsensor realisierbar ist. Hierzu müssen unterschiedliche Drucksensoren eingesetzt werden, welche in unterschiedlichen Druckbereichen repräsentativ messen. Gemäss der vorliegenden Erfindung wurden ein Pirani-Drucksensor 1 und ein Kaltkathoden-Ionisationsmesssensor 3 eingesetzt. Aus diesem Grunde wurde bereits in den Fig. 1 und 2 einerseits für die physikalische Grösse das Symbol p eingesetzt, für die Sensorausgangssignale die Indizierung p (Pirani) und k (Kaltkathode) gewählt.

Im Falle der Druckmessung mit den beiden erwähnten, erfindungsgemäss eingesetzten Drucksensoren sind nicht additive Fehler, d.h. Nullpunktfehler, vorrangig, sondern multiplikative Effekte, d.h. Fehler bezüglich Kennliniensteilheit.

In weitaus bevorzugter Art und Weise wird deshalb für das der vorliegenden Erfindung primär zugrundegelegte Druckmessproblem die zweite Gewichtungsart gewählt, nämlich die multiplikative Kombination der Drucksensor-Ausgangssignale gemäss Fig. 3 und (2).

Dieses Druckmessproblem wird nun auch weiter erläutert.

Aus der CH-A-684 805, welche - der US-A-5 475 623 entspricht, ist es bekannt, wie von einem Pirani-Drucksensor ein zum Logarithmus des Druckes proportionales Ausgangssignal realisiert wird: grundsätzlich durch Ausnützung der logarithmischen Abhängigkeit der Basis-Emitter-Spannung eines Bipolartransistors vom Kollektorstrom. Steuert das elektrische Ausgangssignal des Sensors die Basis-Emitter-Strecken von Bipolartransistoren an, so wird ein zum Kollektorstrom proportionales Ausgangssignal proportional zum Logarithmus des erfassten Druckwertes.

Analog kann mit dem Ausgangssignal des Kaltkathoden-Ionisationssensors verfahren werden.

Es mögen nun folgende Abkürzungen gelten:

$$U_A = \log A,$$

$$U_p = \log p_p, \tag{3}$$

$$U_k = \log p_k, \text{ mit U z.B. in V, p z.B. in mbar.}$$

Aus (2) ergibt sich somit die Kombinationsfunktion bzw. das Ausgangssignal $U_A$ zu

$$U_A = fU_p + (1-f)U_k \tag{4}$$

Gemäss Fig. 4 wird demnach das Ausgangssignal des Pirani-Sensors 1 über eine Logarithmierungseinheit $9_p$ geführt, während das Ausgangssignal des Kaltkathoden-Ionisationssensors 3, $p_k$, über eine Logarithmierungseinheit $9_k$ geführt wird. Beide Einheiten 9 sind beispielsweise auf dem Prinzip der Ausnützung der erwähnten Basisemitter/Kollektorstromabhängigkeit aufgebaut.

An Multiplikationseinheiten $11_p$ und $11_k$ werden die Signale $U_p$ bzw. $U_k$ entsprechend mit den Gewichtungsfunktionen f vom Ausgang der Gewichtungsfunktionseinheit 5, bzw. 1-f, gewichtet und an der Summationseinheit 13 zur Bildung des Ausdruckes (4), beispielsweise in Art analoger Programmierung, summiert.

Im weiteren soll nun auf die Bildung der Gewichtungsfunktion f und damit der Komplementärgewichtungsfunktion 1-f eingegangen werden.

Bis anhin wurde eine Systemdarstellung in einzelnen, getrennten Funktionsblöcken gewählt, um die erfindungsgemässe Gewichtungstechnik zu erläutern.

Es versteht sich von selbst, dass, nebst einer daran angesteuerten Realisationstechnik in der Art analoger Programmierung, das dargestellte Prinzip durch analoge Schaltungstechnik oder durch digitale Verarbeitungstechnik oder durch andere Techniken realisiert werden kann. Nachfolgend wird primär auf Realisationsformen in Analogtechnik und nach dem Pulsbreiten-Modulationsverfahren als heute bevorzugte Realisationstechniken eingegangen.

Bekanntlich ist die obere Messbereichsgrenze des Kaltkathoden-Ionisationssensors 3 anzusetzen bei $10^{-2}$ mbar, die untere Messbereichsgrenze des Pirani-Sensors bei $10^{-4}$ mbar. Damit muss oberhalb von $10^{-2}$ mbar praktisch ausschliesslich der Pirani-Sensor das Messausgangssignal bestimmen, während unterhalb von $10^{-4}$ mbar praktisch ausschliesslich der Kaltkathoden-Ionisationssensor 3 das Messresultat bestimmen muss. Dazwischen, d.h. zwischen $10^{-4}$ mbar und $10^{-2}$ mbar soll ein stetiger monotoner Uebergang der Messsignalrelevanz vom Kaltkathoden-Ionisationssensor 3 zum Pirani-Sensor 1 erfolgen.

Es soll somit für den Idealfall gelten:

$$f = 1 \text{ für } p > 1e^{-2} \text{mbar} \tag{5a}$$

$$f = 0 \text{ für } p < 1e^{-4} \text{mbar} \tag{5b}$$

Es stellen sich nun die Fragen einerseits nach der spezifischen Form der Funktion f, anderseits danach, von welcher Grosse oder von welchen Grössen sie abhängen soll.

(a): Das Steuern der Gewichtungsfunktion f an der Einheit 5 durch den wirklichen Druck p bzw. die zu messende physikalische Grösse ist in den allermeisten Fällen nicht möglich, da die diesbezügliche Information eben nicht vorliegt.

(b): Das Steuern der Gewichtungsfunktion durch das Ausgangssignal des Pirani-Sensors 1 bietet sich an, weil der Pirani-Sensor 1 über den vollen Druckbereich in Betrieb bleiben kann und deshalb über den ganzen Druckbereich ein Ausgangssignal vorliegt. Bei Drücken im Bereich von $10^{-4}$ mbar ist aber die Messgenauigkeit reduziert, womit die Steuerung der Gewichtungsfunktion f an der Gewichtungseinheit 5 durch das Ausgangssignal des Pirani-Sensors nicht optimal ist.

(c): Das Steuern der Gewichtungsfunktion f durch das Ausgangssignal des Kaltkathoden-Ionisationssensors 3 ist keine geeignete Lösung, da der erwähnte Sensor erst unterhalb des mit dem Pirani-Sensor 1 gemessenen Druckes von $10^{-2}$ mbar überhaupt eingeschaltet werden darf.

(d): Das Steuern der Gewichtungsfunktion durch den bereits gewichtet kombinierten Ausgangssignalwert entsprechend A wäre an sich gut, da dieser Wert dank der Kombination der beiden Sensorausgangssignale bereits eine gute Näherung an den wirklichen Druck ist. Die damit verbundene Rückführung des gewichteten Ausgangssignals zu seiner eigenen Gewichtungsadaption kann aber in gewissen Fällen zu Stabilitätsproblemen bzw. zu Schwingungserscheinungen führen.

Nebst der Steuerung von f durch eine Grösse $p_p$, $p_k$, p, A allein können aber Kombinationen dieser und weiterer Grössen hierzu eingesetzt werden:

(e): Als in jeder Beziehung, d.h. sowohl was Genauigkeit anbelangt wie auch was Machbarkeit anbelangt, optimale Lösung hat sich die Steuerung der Gewichtung durch eine Kombination des Pirani-Sensorausgangssignals $p_p$ und des gewichtet kombinierten Wertes A erwiesen. Diese Kombination ergibt sich zu

$$f = f(p_p{}^a {}_* A^b) \tag{6}$$

Diese Gewichtungsfunktion vereinfacht sich bei Vorliegen logarithmusproportionaler Ausgangssignale $U_p$ bzw. $U_A$ gemäss (3) zu

$$f' = f'(aU_p + bU_A) \qquad (6a)$$

Darin bezeichnen a und b noch frei wählbare Konstanten.

Diese Gewichtungsfunktion soll den Bedingungen gemäss (5a) und (5b) genügen und im Zwischenbereich monoton und stetig mit dem Druck ansteigen.

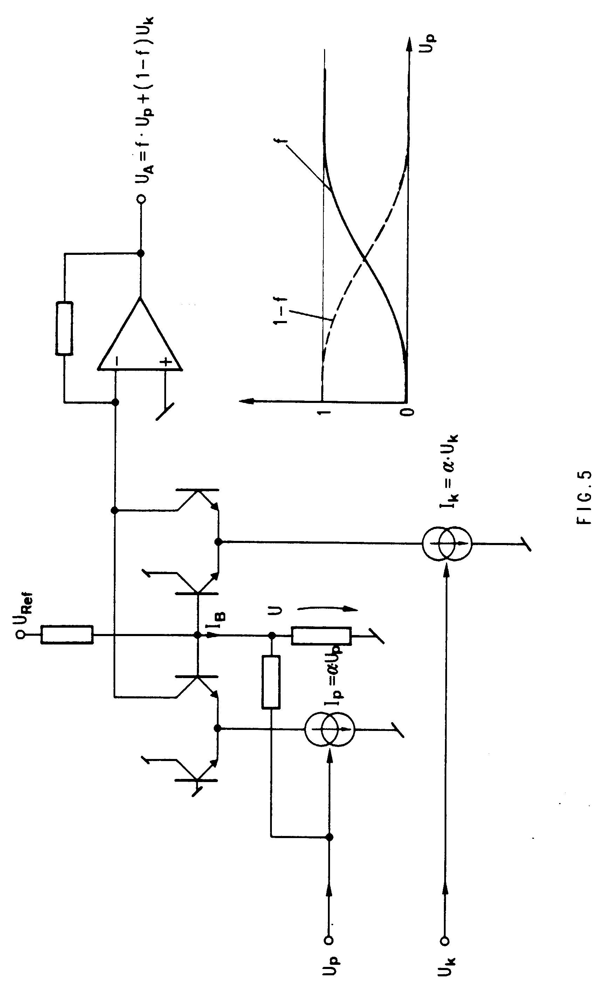

Fig. 5 zeigt eine mögliche bevorzugte Realisierungsform nach (b) von Gewichtungseinheit kombiniert mit Messwert-Bestimmungseinheit 7 in Analogtechnik. Wiederum die logarithmische Abhängigkeit zwischen Basis-Emitter-Spannung von Bipolartransistoren und deren Kollektorstrom ausnützend, ergibt sich für die Gewichtungsfunktion

$$f = 1/[\exp(-\lambda U) + 1] \qquad (7a)$$

$$1\text{-}f = 1/[\exp(\lambda U) + 1] \qquad (7b)$$

mit

$\lambda = e/kT$,

e = Elementarladung,

k = Boltzmann-Konstante,

T = absolute Temperatur.

Wie aus Fig. 5 ohne weiteres ersichtlich, ergibt sich für das Signal U

$$U = c\text{+}d\, U_p \qquad (7c)$$

Wie bei der Berechnung von $U_A$, insbesondere aufgrund der bereits erwähnten logarithmischen Abhängigkeiten zwischen Basis-Emitter-Spannungen und Kollektorströmen der Bipolartransistoren, mit anschliessender Limes-Bildung für $U_p \rightarrow 0$ bzw. $U_p \rightarrow \infty$, ergibt sich der in Fig. 5 dargestellte Verlauf für f und (1-f). Die Gewichtungsfunktion f zeichnet sich dabei durch einen sehr weichen Uebergang aus. Sie erreicht allerdings den Wert 1 erst exakt bei unendlich hohen Drücken, den Wert 0 bei einem beliebigen, zu 1 normierten Druckwert, womit die oben erwähnten Gleichungen (5a, b) nur genähert erfüllt sind.

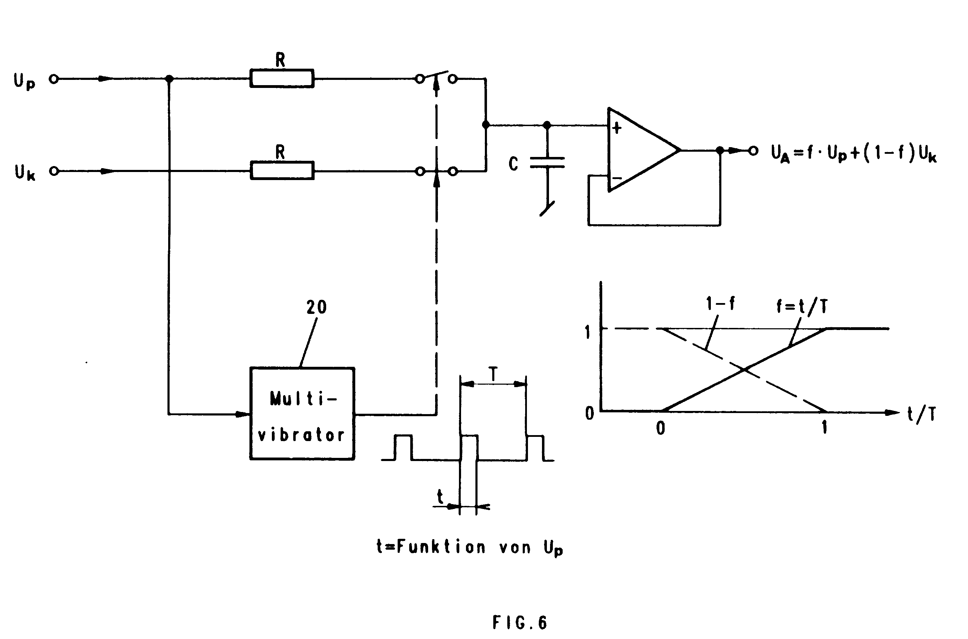

In Fig. 6 ist schematisch eine Schaltungsanordnung dargestellt, womit, dem Prinzip (b) folgend, aufgrund einer Pulsbreitenmodulation die Gewichtungsfunktion realisiert wird. Falls gilt:

$$RC \gg T$$

mit T als Impulsrepetitionsperiode des astabilen Multivibrators 20, so wird:

$$f = t/T \qquad (8)$$

Die Pulsbreite t bzw. allgemeiner das Tastverhältnis wird dabei mit dem Ausgangssignal des Pirani-Sensors bzw. mit $U_p$ (3) gesteuert. Hierdurch kann beispielsweise die in Fig. 6 dargestellte lineare Gewichtungsfunktion f bzw. 1-f realisiert werden. Dies bei Wahl von

$$t = c' + d'\, U_p \qquad (8a)$$

Selbstverständlich sind auch andere, dem Problem angepasste Steuerungen t = t(p) möglich (vgl. z.B. U. Tietze, Ch. Schenk, Halbleiter-Schaltungstechnik, Springer Verlag (1988), Kap. 11.7 und 11.8).

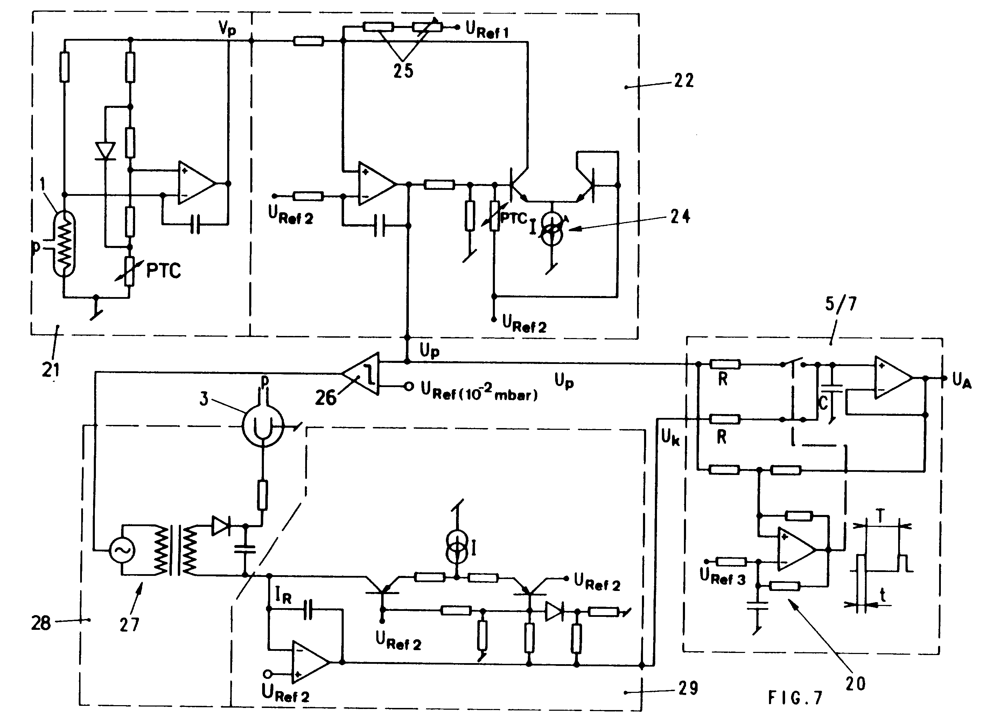

In Fig. 7 ist eine heute bevorzugte Schaltungskonfiguration nach dem Prinzip (e) dargestellt. Das Ausgangssignal $p_p$ der Pirani Pirani-Messbrückenschaltung 21 mit Pirani-Sensor 1 wird an einer Logarithmierschaltung 22 logarithmiert, was $U_p$ ergibt. Dabei erfolgt an einer einstellbaren Stromquelle 24 der Abgleich von $U_p$ für $p \rightarrow \infty$ und an einer Potentiometerschaltung 25 der Abgleich für $p \rightarrow 0$.

Ueber eine schwellwertsensitive Einheit 26, welcher der Referenzwert $U_{ref}$ entsprechend $10^{-2}$ mbar zugeführt ist, wird ab darunterliegenden Druckwerten der Hochspannungsnetzteil 27 der Kaltkathoden-Ionisationsmessanordnung 28 mit dem Kaltkathoden-Ionisationssensor 3 in Betrieb gesetzt. Das Ausgangssignal $I_k$ wird an einer "Logarithmierschaltung" 29 logarithmiert. Das Ausgangssignal $U_k$ und das Ausgangssignal $U_p$ der "Logarithmierschaltung" 22 werden der Gewichtungs- und Messwert-Bestimmungsschaltung 5, 7 zugeführt, welche nach dem anhand von Fig. 6 erläuterten Prinzip arbeitet, bei der aber gemäss (f) das Ausgangssignal $U_A$ zusammen mit $U_p$ das Tastverhältnis t/T steuert.

Die Sensoren, mit ihren Messschaltungen, erzeugen messprinzipspezifische Ausgangskennlinien $V_p$, $I_k$. Wie diese Kennlinien in logarithmisch vom Druck abhängige Signale $U_p$, $I_k$ gewandelt werden, ist in CH-A-684 805 für das Pirani-Prinzip explizit beschrieben.

Analog wird für das Kaltkathodenprinzip gemäss Fig. 7 vorgegangen.

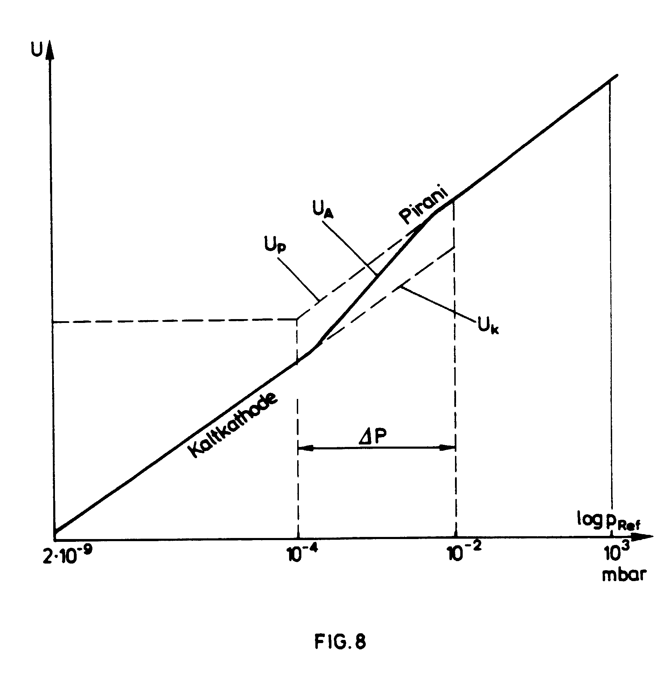

In Fig. 8 ist die mit der Anordnung gemäss Fig. 7 realisierte Messkennlinie $U_A$ dargestellt, gestrichelt die Grossen $U_p$ und $U_k$, unter der Annahme, dass sich die Kurven für $U_p$ und $U_k$ z.B. wegen vom Kalibriergas abweichender Gasart unterscheiden.

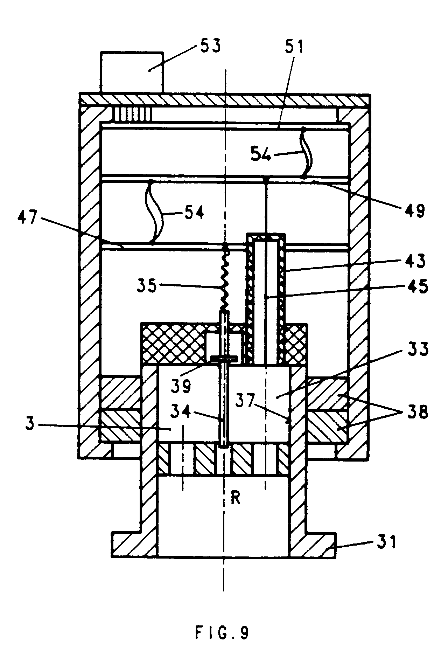

In Fig. 9 ist ein erfindungsgemässer Kombinationsmesskopf schematisch vereinfacht dargestellt, ausgeführt als Flanschanschluss für eine Vakuumkammer. Von einem Flanschanschluss 31 wird die Messkammer 33 als Plasmaraum der Kaltkathoden-Ionisationssensoranordnung 3 druckbeaufschlagt. Es bezeichnen darin 34 den Anodenstift mit Messstromanschluss und Hochspannungsanschluss 35 sowie 37 die Kathodenwand. Im Plasmaraum 33 wird mittels Ferrit-Magnetringen 38 das notwendige axiale Magnetfeld erzeugt.

Im weiteren bezeichnet das Positionszeichen 39 eine am Anodenstift 34 angebrachte Anordnung, welche dank scharfkantiger Struktur das Zünden der Entladung fördert.

Exzentrisch bezüglich der Flanschachse R mit dem Anodenstift 34 ist eine Pirani-Messanordnung 43 mit Heizwendel 45 vorgesehen. Die Hochspannungsspeisung 27 (Fig. 7) für den Kaltkathoden-Ionisationssensor 3 ist auf einer Printplatte 47 aufgebaut, die Messschaltung entsprechend 21, 22, 29 von Fig. 7 auf einer weiteren Printplatte 49 und die Gewichtungs- und Ausgangssignal-Bestimmungseinheit auf einer dritten Platte 51.

Mit 53 ist schematisch ein Anschlussstecker für die erfindungsgemässe Kombination, mit 54 sind schematisch Verbindungen zwischen den vorgesehenen Prints mit den beispielsweise erwähnten Schaltungen dargestellt.

Die vorgeschlagene Gewichtungstechnik zur Lösung der gestellten Aufgabe lässt sich analog auch für das Kombinieren von mehr als zwei Sensoren einsetzen, um den Bereich für eineindeutiges Messen noch weiter zu erhöhen.

Im weiteren können damit auch die Sensorkombinationen

- Gasreibungsmanometer/Kaltkathoden-Ionisationssensor und/oder

- Pirani/Heisskathoden-Ionisationssensor und/oder

- zwei Membranmanometer mit unterschiedlichen Messbereichen

mindestens zu zweit oder mit den vorbeschriebenen Sensoren realisiert werden, mit eineindeutigen erweiterten Messbereichen.

## Patentansprüche

1. Verfahren zum Auswerten der Ausgangssignale zweier Drucksensoren (1, 3), wovon ein erster für einen oberen Druckbereich ausgelegt ist, der zweite für einen unteren und die beiden Druckbereiche in einem Zwischenbereich sich überdecken, jedoch darin bei gleichen Drücken unterschiedliche Werte auf den Ausgangssignalcharakteristiken aufweisen, dadurch gekennzeichnet, dass man:

    a) bei Vorliegen vornehmlich parallel verschobener Ausgangssignalcharakteristiken im Zwischenbereich ein gemeinsames Ausgangssignal A der Form

$$A = fp_p + (1-f)p_k$$

erzeugt, worin bedeuten:

$p_p$: Ausgangssignal des ersten Sensors (1),

$p_k$: Ausgangssignal des zweiten Sensors (3),

f: eine mit dem Druck p sich stetig monoton ändernde Gewichtungsfunktion,

b) bei sich im wesentlichen bezüglich Steigung unterscheidenden Extrapolationsverläufen ein Ausgangssignal A der Form

$$A = p_p{}^f * p_k{}^{(1-f)}$$

erzeugt,
wobei die Gewichtungsfunktion f im Bereich am und unterhalb des oberen Grenzdruckes des Druckbereiches des zweiten Sensors (3) im wesentlichen zu 0 und im Bereich am und oberhalb des unteren Grenzdruckes des Druckbereiches des ersten Sensors im wesentlichen zu 1 gewählt wird.

2. Verfahren nach Anspruch 1, dadurch gekennzeichnet, dass der erste Sensor (1) ein Pirani-Sensor, der zweite ein Kaltkathoden-Ionisationssensor (3) ist und die Gewichtungsfunktion (f) durch ein vom Ausgangssignal des ersten Sensors (1) abhängiges Signal oder durch eine Kombination des letzteren mit einem vom gemeinsamen Ausgangssignal A abhängigen Signal gegeben ist.

3. Verfahren nach Anspruch 2, dadurch gekennzeichnet, dass die Gewichtungsfunktion f bestimmt wird gemäss

$$f = 1/(\exp(-\lambda U) + 1),$$

worin bedeuten:

$\lambda = e/kT$,

e = Elementarladung,

k = Boltzmann-Konstante,

T = absolute Temperatur,

$U = c + d \log p_p$.

4. Verfahren nach einem der Ansprüche 1 bis 3, dadurch gekennzeichnet, dass die Gewichtung durch Verarbeitung der Signale ($p_p$, $p_k$, A) in Analogtechnik oder durch pulsbreitenmoduliertes Ausschalten von den Sensorausgangssignalen abhängiger Signale zum gemeinsamen Ausgang gebildet wird oder durch digitale Signalverarbeitung.

5. Verfahren nach einem der Ansprüche 1, 2 oder 4, dadurch gekennzeichnet, dass die Gewichtungsfunktion f zu

$$f = f(p_p{}^a * A^b)$$

gebildet wird, worin a und b Konstanten sind.

6. Druckmessanordnung mit zwei Druckmesssensoren (1, 3), wovon ein erster für einen oberen Druckbereich ausgelegt ist, der zweite für einen unteren und die Druckbereiche in einem Zwischenbereich sich überdecken, jedoch darin, bei gleichen Drücken, unterschiedliche Werte auf den Ausgangssignalcharakteristiken aufweisen, dadurch gekennzeichnet, dass die Ausgänge der Sensoren (1, 3) auf eine Gewichtungs- und Auswerteeinheit (5, 7) geführt sind, deren Ausgangssignal A mindestens in erster Näherung

$$A = fp_p + (1-f)p_k$$

oder

$$A = p_p{}^f * p_k{}^{(1-f)}$$

folgt, worin bedeuten:

A: Ausgangssignal der Gewichtungs- und Auswerteeinheit,

$p_p$: Ausgangssignal des ersten Sensors (1),

$p_k$: Ausgangssignal des zweiten Sensors (3),

f: Gewichtungsfunktion, welche stetig monoton im Zwischenbereich zwischen 0 und 1 verläuft.

7. Anordnung nach Anspruch 6, dadurch gekennzeichnet, dass an der Gewichtungs- und Auswerteeinheit (5, 7) die Gewichtungsfunktion (f) durch den Ausgang des einen der Sensoren oder durch den Ausgang des einen der Sensoren und den Ausgang der Gewichtungs- und Auswerteeinheit (5, 7) gesteuert ist.

8. Anordnung nach Anspruch 7, dadurch gekennzeichnet, dass der eine Sensor ein Pirani-Sensor (1), der zweite ein Kaltkathoden-Ionisationssensor (3) ist.

9. Anordnung nach einem der Ansprüche 6 bis 8, dadurch gekennzeichnet, dass der erste Sensor ein Pirani-Sensor (1), der zweite ein Kaltkathoden-Ionisationssensor (3) ist und die Gewichtungs- und Auswerteeinheit (5, 7) das Ausgangssignal nach

$$A = p_p{}^f * p_k{}^{(1-f)}$$

erzeugt.

10. Anordnung nach einem der Ansprüche 6 bis 9, dadurch gekennzeichnet, dass die Gewichtungs- und Auswerteeinheit (5, 7), für je die Ausgangssignale der beiden Sensoren (1, 3) eine Logarithmierungseinheit (9) umfasst.

11. Anordnung nach einem der Ansprüche 9 oder 10, dadurch gekennzeichnet, dass die Gewichtungs- und Auswerteeinheit (5, 7), eine vom Ausgangssignal des Pirani-Sensors (1), gesteuerte Bipolartransistorschaltung umfasst, woran die logarithmische Abhängigkeit zwischen Basis-Emitter-Spannung eingangsseitig und Kollektorstrom ausgangsseitig für die Gewichtung ausgenützt wird.

12. Anordnung nach einem der Ansprüche 9 bis 11, dadurch gekennzeichnet, dass die Gewichtungs- und Auswerteeinheit (5, 7) eine Pulsbreiten-Modulationsschaltung aufweist, bei welcher, pulsbreitengesteuert, die Ausgangssignale der beiden Sensoren (1, 3) an einer Ueberlagerungseinheit überlagert werden, wobei das Impulstastverhältnis der Pulsbreitenmodulation durch das Ausgangssignal des Pirani-Sensors (1) oder durch das Ausgangssignal des Pirani-Sensors und das Ausgangssignal der Ueberlagerungseinheit gesteuert ist.

13. Anordnung nach einem der Ansprüche 6 bis 12, dadurch gekennzeichnet, dass eine Transistorschaltung oder eine Pulsbreiten-Modulationseinheit für die Gewichtung vorgesehen ist oder eine digitale Signalverarbeitungseinheit.

14. Druckmesskopf mit einer Aufnahmeöffnung für ein Druckmedium und einer elektrischen Ausgangsleitung, dadurch gekennzeichnet, dass er eine Druckmessanordnung nach einem der Ansprüche 6 bis 13 umfasst.

15. Druckmesskopf nach Anspruch 14, dadurch gekennzeichnet, dass er als Druckmesssensoren (1, 3) einen Pirani-Sensor, einen Kaltkathoden-Ionisationssensor und eine Messschaltung hierfür baulich vereint.

**16.** Druckmesskopf nach einem der Ansprüche 14 oder 15, dadurch gekennzeichnet, dass der eine der Sensoren (3) ein Kaltkathoden-Ionisationssensor ist mit einer scharfkantigen Zündelektrode.

**17.** Verfahren nach einem der Ansprüche 1 bis 5 oder Anordnung bzw. Druckmesskopf nach einem der Ansprüche 6 bis 14 und 16, dadurch gekennzeichnet, dass anstelle der Sensorkombination Pirani/Kaltkathoden-Ionisation folgende eingesetzt werden:

- Gasreibungsmanometer/Kaltkathoden-Ionisationssensor und/oder

- Pirani/Heisskathoden-Ionisationssensor und/oder

- zwei Membranmanometer mit unterschiedlichen Messbereichen.

**18.** Verfahren bzw. Anordnung bzw. Messkopf nach einem der Ansprüche 1 bis 17, dadurch gekennzeichnet, dass mehr als zwei Drucksensoren eingesetzt sind.

## Claims

**1.** Process for evaluating the output signals of two pressure sensors (1, 3), of which a first is designed for an upper pressure range, the second for a lower pressure range and the two pressure ranges overlap in an intermediate range, but at the same pressures have different values at the output signal characteristics, characterised in that:

a) in the presence of mainly parallel offset output signal characteristics in the intermediate range, a common output signal A is generated of the form

$$A = f p_p + (1-f)\, p_k$$

where:

$p_p$: output signal of the first sensor (1),
$p_k$: output signal of the second sensor (3),
f: a weighting function which changes constantly monotonously with the pressure p,

b) on extrapolation processes differing essentially in regard to slope, an output signal A is generated of the form

$$A = p_{pf} * p_k^{(1-f)}$$

where the weighting function f in the area at and below the upper limit pressure of the pressure range of the second sensor (3) is essentially selected as 0 and in the range at and above the lower pressure limit for the pressure range of the first sensor essentially as 1.

**2.** Process according to claim 1 characterised in that the first sensor 1 is a Pirani sensor and the second a cold cathode ionisation sensor (3) and the weighting function (f) is given by a signal dependent on the output signal from the first sensor (1) or a combination of the latter with a signal dependent on the common output signal A.

**3.** Process according to claim 2 characterised in that the weighting function f is determined according to

$$f = 1/(\exp(-\lambda U) + 1)$$

where:

$\lambda =$ e/Kt

e = elementary charge
k = Boltzmann constant
T = absolute temperature
U = c + d log $p_p$.

4. Process according to any of claims 1 to 3, characterised in that the weighting is formed by processing the signals ($p_p$, $p_k$, A) in analogue technology or by pulse width modulated disconnection of the signals dependent on the sensor output signals to the common output or by digital signal processing.

5. Process according to any of claims 1, 2 or 4, characterised in that the weighting function f is formed as

$$f = f\,(p_p{}^a * A^b)$$

where a and b are constants.

6. Pressure measurement arrangement with two pressure measurement sensors (1, 3), one of which is designed for an upper pressure range, the second for a lower pressure range and the pressure ranges overlap in an intermediate range, but at the same pressures have different values of the output signal characteristics, characterised in that the outputs of the sensors (1, 3) are passed to a weighting and evaluation unit (5, 7), the output signal A of which at least in a first approximation follows

$$A = fp_p + (1\text{-}f)\,p_k$$

or

$$A = p_p{}^f * p_k{}^{(1\text{-}f)}$$

where:

A: output signal of the weighting and evaluation unit,
$p_p$: output signal of the first sensor (1),
$p_k$: output signal of the second sensor (3),
f: weighting function which develops constantly monotonously in the intermediate range between 0 and 1.

7. Arrangement according to claim 6, characterised in that at the weighting and evaluation unit (5, 7), the weighting function (f) is controlled by the output of one of the sensors or by the output of one of the sensors and the output of the weighting and evaluation unit (5, 7).

8. Arrangement according to claim 7, characterised in that one sensor is a Pirani sensor (1), and the second a cold cathode ionisation sensor (3).

9. Arrangement according to any of claims 6 to 8, characterised in that the first sensor is a Pirani sensor (1), the second a cold cathode ionisation sensor (3) and the weighting and evaluation unit (5, 7) generates the output signal according to

$$A = p_p{}^f * p_k{}^{(1\text{-}f)}.$$

10. Arrangement according to any of claims 6 to 9, characterised in that the weighting and evaluation unit (5, 7) comprises a logarithmizing unit for each of the output signals of the two sensors (1, 3).

11. Arrangement according to any of claims 9 or 10, characterised in that the weighting and evaluation unit (5, 7) comprises a bipolar transistor circuit controlled by the output signal of the Pirani sensor (1), at which the logarithmic dependency between the base emitter voltage on the input side and the collector current on the output side is utilised for the weighting.

**12.** Arrangement according to any of claims 9 to 11, characterised in that the weighting and evaluation unit (5, 7) has a pulse width modulation circuit at which, in a pulse width controlled manner, the output signals of the two sensors (1, 3) are superimposed at a superimposition unit, where the mark space ratio of the pulse width modulation is controlled by the output signal of the Pirani sensor (1) or by the output signal of the Pirani sensor and the output signal of the superimposition unit.

**13.** Arrangement according to any of claims 6 to 12, characterised in that a transistor circuit or a pulse width modulation unit is provided for the weighting or a digital signal processing unit.

**14.** Pressure measurement head with a holder opening for a pressure medium and an electric output line, characterised in that it comprises a pressure measurement arrangement according to any of claims 6 to 13.

**15.** Pressure measurement head according to claim 14, characterised in that as a pressure measurement sensor (1, 3) it combines constructionally a Pirani sensor, a cold cathode ionisation sensor and a measurement circuit for this.

**16.** Pressure measurement head according to any of claims 14 or 15, characterised in that one of the sensors (3) is a cold cathode ionisation sensor with a sharp-edged ignition electrode.

**17.** Process according to any of claims 1 to 5 or arrangement or pressure measurement head according to any of claims 6 to 14 and 16, characterised in that instead of the sensor combination Pirani/cold cathode ionisation, the following are used:

- gas friction manometer/cold cathode ionisation sensor and/or
- Pirani/hot cathode ionisation sensor and/or
- two membrane manometers with different measurement ranges.

**18.** Process or arrangement or measuring head according to any of claims 1 to 17, characterised in that more than two pressure sensors are used.

**Revendications**

**1.** Procédé pour évaluer les signaux de sortie de deux capteurs de pression (1, 3) parmi lesquels un premier capteur de pression est conçu pour une plage de pression supérieure et le second pour une plage de pression inférieure et les deux plages de pression se couvrent dans une plage intermédiaire mais présentent dans celle-ci, pour des pressions égales, des valeurs différentes sur les courbes caractéristiques de signaux de sortie, caractérisé en ce que :

a) en présence de courbes caractéristiques de signaux de sortie décalées principalement parallèlement, dans la plage intermédiaire, on génère un signal de sortie commun A ayant la forme

$$A = f p_p + (1\text{-}f) p_k$$

dans laquelle

$p_p$ désigne le signal de sortie du premier capteur (1),
$p_k$ le signal de sortie du second capteur (3) et
f une fonction de pondération qui varie de façon constante et monotone avec la pression p,

b) en présence de courbes d'extrapolation présentant essentiellement des pentes différentes, on génère un signal de sortie A ayant la forme

$$A = p_p{}^f * p_k{}^{(1\text{-}f)},$$

étant précisé que pour la fonction de pondération f, on choisit globalement 0 au niveau et au-dessous de la pression limite supérieure de la plage de pression du second capteur (3), et globalement 1 au niveau et au-dessus de la pression limite inférieure de la plage de pression du premier capteur.

2. Procédé selon la revendication 1, caractérisé en ce que le premier capteur (1) est un capteur de Pirani et le second un capteur à ionisation à cathode froide (3), et la fonction de pondération (f) est définie par un signal dépendant du signal de sortie du premier capteur (1) ou par une combinaison de ce signal avec un signal dépendant du signal de sortie commun A.

3. Procédé selon la revendication 2, caractérisé en ce que la fonction de pondération f est définie selon

$$f = 1/(\exp(-\lambda U) + 1),$$

dans laquelle :

$\lambda =$ e/kT,
e = charge élémentaire,
k = constante de Boltzmann,
T = température absolue,
$U =$ $c + d \log p_p$.

4. Procédé selon l'une des revendications 1 à 3, caractérisé en ce que la pondération est formée grâce au traitement des signaux ($p_p$, $p_k$, A) suivant la technique analogique ou grâce à l'élimination par modulation de largeur d'impulsions de signaux dépendants des signaux de sortie de capteurs, pour une sortie commune, ou grâce à un traitement numérique des signaux.

5. Procédé selon l'une des revendication 1, 2 ou 4, caractérisé en ce que la fonction de pondération f est formée selon

$$f = f(p_p{}^a * A^b),$$

a et b étant des constantes.

6. Manomètre comportant deux capteurs de pression (1, 3), le premier conçu pour une plage de pression supérieure et le second pour une plage de pression inférieure, les plages de pression se couvrant dans une plage intermédiaire mais présentant dans celle-ci, pour des pressions égales, des valeurs différentes sur les courbes caractéristiques de signaux de sortie, caractérisé en ce que les sorties des capteurs (1, 3) sont transmises à une unité de pondération et d'évaluation (5, 7) dont le signal de sortie A suit au moins approximativement

$$A = f p_p + {}^{(1-f)}p_k$$

ou

$$A = p_p{}^f * p_k{}^{(1-f)},$$

dans lesquelles :

A désigne le signal de sortie de l'unité de pondération et d'évaluation,
$p_p$ le signal de sortie du premier capteur (1),
$p_k$ le signal de sortie du second capteur (3) et
f la fonction de pondération qui a une courbe constante et monotone dans la plage intermédiaire entre 0 et 1.

7. Dispositif selon la revendication 6, caractérisé en ce qu'au niveau de l'unité de pondération et d'évaluation (5, 7), la fonction de pondération (f) est commandée par la sortie de l'un des capteurs ou par la sortie de l'un des capteurs et la sortie de l'unité de pondération et d'évaluation (5, 7).

8. Dispositif selon la revendication 7, caractérisé en ce qu'un capteur est un capteur de Pirani (1), et l'autre un capteur à ionisation à cathode froide (3).

9. Dispositif selon l'une des revendications 6 à 8, caractérisé en ce que le premier capteur est un capteur de Pirani (1) et le second un capteur à ionisation à cathode froide (3), et l'unité de pondération et d'évaluation (5, 7) génère le signal de sortie selon

$$A = p_p^{\,f} * p_k^{\,(1-f)}.$$

10. Dispositif selon l'une des revendications 6 à 9, caractérisé en ce que l'unité de pondération et d'évaluation (5, 7) comprend des unités logarithmiques (9) respectives pour les signaux de sortie des deux capteurs (1, 3).

11. Dispositif selon la revendication 9 ou 10, caractérisé en ce que l'unité de pondération et d'évaluation (5, 7) comprend un circuit à transistors bipolaires, commandé par le signal de sortie du capteur de Pirani (1), au niveau duquel la dépendance logarithmique entre la tension d'émetteur de base, côté entrée, et le courant collecteur, côté sortie, est exploitée pour la pondération.

12. Dispositif selon l'une des revendications 9 à 11, caractérisé en ce que l'unité de pondération et d'évaluation (5, 7) comporte un circuit de modulation de largeur d'impulsions avec lequel les signaux de sortie des deux capteurs (1, 3) sont superposés au niveau d'une unité de superposition, en étant commandés par la largeur d'impulsions, le taux d'impulsions de la modulation de largeur d'impulsions étant commandé par le signal de sortie du capteur de Pirani (1) ou par le signal de sortie du capteur de Pirani et le signal de sortie de l'unité de superposition.

13. Dispositif selon l'une des revendications 6 à 12, caractérisé en ce qu'un circuit à transistors ou une unité de modulation de largeur d'impulsions est prévu pour la pondération, ou une unité numérique de traitement de signaux.

14. Tête manométrique comportant une ouverture de réception pour un agent de pression, et une ligne électrique de sortie, caractérisée en ce qu'elle comprend un manomètre selon l'une des revendications 6 à 13.

15. Tête manométrique selon la revendication 14, caractérisée en ce qu'elle réunit dans sa construction, comme capteurs de pression (1, 3), un capteur de Pirani, un capteur à ionisation à cathode froide et un circuit de mesure pour ceux-ci.

16. Tête manométrique selon la revendication 14 ou 15, caractérisée en ce que l'un des capteurs (3) est un capteur à ionisation à cathode froide avec une électrode d'amorçage à arêtes vives.

17. Procédé selon l'une des revendications 1 à 5 ou dispositif ou tête manométrique selon l'une des revendications 6 à 14 et 16, caractérisé en ce qu'on utilise, au lieu de la combinaison capteur de Pirani/capteur à ionisation à cathode froide, la combinaison suivante :

- manomètre à friction gazeuse/capteur à ionisation à cathode froide et/ou
- capteur de Pirani/capteur à ionisation à cathode chaude et/ou
- deux manomètres à membrane avec des plages de mesure différentes.

18. Procédé ou dispositif ou tête manométrique selon l'une des revendications 1 à 17, caractérisé en ce qu'on utilise plus de deux capteurs de pression.

FIG.1

FIG.2

FIG.3

FIG.4

$$U_A = f \cdot U_p + (1-f) U_k$$

$$I_k = \alpha \cdot U_k$$

$$I_p = \alpha \cdot U_p$$

$U_{Ref}$

$I_B$

$U$

$U_p$

$U_k$

$U_p$

f

1-f

1

0

F I G . 5

18

FIG.6

$t = \text{Funktion von } U_p$

FIG. 7

FIG. 8

FIG.9